# EUROPEAN PATENT SPECIFICATION

(11) **EP 3 503 297 B1**
(45) Date of publication and mention of the grant of the patent: **17.02.2021**
(21) Application number: 17857670.8
(22) Date of filing: 28.11.2017
(51) Int. Cl.: H01Q 5/30, H01Q 21/30, H01Q 5/40, H01Q 9/42, H01Q 1/28, B64C 39/02, H01Q 1/38

(54) **DUAL-FREQUENCY-BAND MICRO-STRIP ANTENNA AND UNMANNED AERIAL VEHICLE USING SAME**
DOPPELFREQUENZBAND-MIKROSTREIFENANTENNE UND UNBEMANNTES LUFTFAHRZEUG DAMIT
ANTENNE MICRO-BANDE À DOUBLE BANDE DE FRÉQUENCE ET VÉHICULE AÉRIEN SANS PILOTE L'UTILISANT

(30) Priority: 14.12.2016 CN 201621380704 U
(43) Date of publication of application: 26.06.2019
(73) Proprietor: Autel Robotics Co., Ltd., Shenzhen, Guangdong 518055 (CN)
(72) Inventor: SUN, Yiye, Shenzhen Guangdong 518055 (CN)
(74) Representative: Gulde & Partner
(86) International application number: PCT/CN2017/113381
(87) International publication number: WO 2018/107965

(56) References cited:
- CN-A- 1 525 597
- CN-A- 101 533 947
- CN-A- 106 184 707
- CN-U- 204 424 449
- CN-U- 205 583 125
- CN-Y- 201 392 882
- TW-A- 201 328 016
- US-A1- 2007 146 213
- US-A1- 2010 265 151

## Description

### Technical Field

The present invention relates to the field of communications technologies, and specifically, to a dual-band microstrip antenna and an unmanned aerial vehicle using same.

### Related Art

With the rapid development of wireless communications and to meet requirements of various data services, antenna designs are developing mainly toward miniaturization, multi-band, and wide-band. To meet the miniaturization requirement, the sizes of the antennas are reduced to adapt to a development trend of increasing integration and decreasing volumes of communications devices. A microstrip antenna is an antenna formed by adhering a conductor patch on a dielectric substrate having a grounding plate, and feeds electricity by using a coaxial line, so that an electromagnetic field is excited between the conductor patch and the grounding plate and radiates out by using a gap. After decades of development, microstrip antennas have been widely applied to many fields. The microstrip antennas have advantages such as simple structures, small sizes, low weights, low costs and flexible and diversified designs.

The directivity pattern of a dual-band (for example, 900 MHz and 2.4 GHz) microstrip antenna has relatively desirable omni-directivity. Currently, the 3-dB beamwidth of a dual-band antenna on a pitch surface is generally approximately 80 degrees. However, during actual use, the antenna usually tilts. When the antenna tilts, a relatively narrow 3-dB beamwidth (for example, 80 degrees) on the pitch surface causes a relatively large change of a signal on a horizontal plane. Consequently, the signal is of poor stability, and even affects normal use of a device. Such antennas are known e.g. from CN 204424449 U, CN 205583125 U, US 2010/265151 A1.

Therefore, how to expand the beamwidth of a dual-band microstrip antenna on a pitch surface, to keep a stable signal when the antenna tilts is a problem that needs to be resolved urgently.

### SUMMARY

A technical problem to be resolved in the present invention is to expand the beamwidth of a microstrip antenna on a pitch surface, to keep a stable signal when the antenna tilts.

Therefore, according to a first aspect, an example of the present invention provides a dual-band microstrip antenna, including: a substrate, having a front surface and a back surface opposite to the front surface;
a first-band microstrip antenna, disposed on the front surface of the substrate and configured to generate first band resonance;
a second-band microstrip antenna, disposed on the back surface of the substrate and configured to generate second-band resonance and high-order resonance of the second-band resonance, the high-order resonance of the second-band resonance being used to be superposed on the first-band resonance; and
a coaxial feeder, disposed on the substrate and configured to feed the first-band microstrip antenna and the second-band microstrip antenna.

The first-band microstrip antenna includes a first grounding plate and a first radio frequency module; and the first grounding plate is electrically connected to a grounding terminal of the coaxial feeder and the first radio frequency module is electrically connected to a feeding terminal of the coaxial feeder.

The first radio frequency module includes: a first microstrip feeder electrically connected to the feeding terminal of the coaxial feeder, an impedance transformation feeding strip electrically connected to the first microstrip feeder and a first oscillator arm electrically connected to the impedance transformation feeding strip.

Optionally, the first radio frequency module further includes: a first microstrip, electrically connected to the first oscillator arm, the first microstrip being configured to expand a bandwidth of the first-band microstrip antenna.

Optionally, the first oscillator arm includes two horizontal portions arranged in parallel and disposed at an interval and a vertical portion disposed between the two horizontal portions and connected to the two horizontal portions, and the first microstrip is disposed in parallel to the vertical portion at an interval and is connected to the two horizontal portions.

Optionally, the first microstrip includes a first portion electrically connected to one of the horizontal portions and a second portion electrically connected to the other one of the horizontal portions, the first portion being disposed opposite to the second portion at an interval.

Optionally, the first oscillator arm is an oscillator arm with a symmetric structure.

The second-band microstrip antenna includes a second grounding plate and a second radio frequency module; and a conductive through hole extending through the first grounding plate and the second grounding plate is provided on the substrate, the second grounding plate is electrically connected to the first grounding plate through the conductive through hole.

The second radio frequency module includes: a second microstrip feeder electrically connected to the second grounding plate, a second microstrip electrically connected to the second microstrip feeder and a second oscillator arm electrically connected to the second microstrip.

Optionally, the second microstrip is a curved microstrip.

Optionally, projections of the impedance transformation feeding strip and the first oscillator arm in a direction perpendicular to the substrate respectively overlap a projection of the second microstrip feeder in the direction perpendicular to the substrate, so that the impedance transformation feeding strip and the first oscillator arm are respectively coupled to the second microstrip feeder.

Optionally, the first-band microstrip antenna is an antenna with a monopole structure, an antenna with a dipole structure or an antenna with a loop structure; and the second-band microstrip antenna is an antenna with a monopole structure, an antenna with a dipole structure or an antenna with a loop structure.

Optionally, the first-band microstrip antenna is a 2.4 GHz-band antenna; and the second-band microstrip antenna is a 900 MHz-band antenna.

According to a second aspect, an embodiment of the present invention provides an unmanned aerial vehicle, including: a vehicle body, a landing gear disposed below the vehicle body and the dual-band microstrip antenna according to any of the first aspect.

Optionally, the dual-band microstrip antenna is disposed in the landing gear.

According to the dual-band microstrip antenna provided in the embodiments of the present invention, the first-band microstrip antenna generates the first-band resonance, and the second-band microstrip antenna generates the second-band resonance and high-order resonance of the second-band resonance, high-order resonance of the second-band resonance is used to be superposed on the first-band resonance. Therefore, the beamwidth of the dual-band microstrip antenna on a pitch surface of the first band can be expanded, so that a stable signal can be kept when the antenna tilts.

### BRIEF DESCRIPTION OF THE DRAWINGS

To describe the technical solutions of the specific embodiments of the present invention or the existing technology more clearly, the following briefly introduces the accompanying drawings required for describing the specific embodiments or the existing technology. Apparently, the accompanying drawings in the following description show only some implementations of the present invention, and a person of ordinary skill in the art may still derive other drawings from these accompanying drawings without creative efforts.
FIG. 1 is a schematic structural diagram of a dual-band microstrip antenna according to an embodiment of the present invention;
FIG. 2 is a schematic diagram of another embodiment of a first microstrip of a dual-band microstrip antenna according to an embodiment of the present invention;
FIG. 3 is a diagram of a scattering parameter test effect of the dual-band microstrip antenna according to an embodiment of the present invention;
FIG. 4 is a schematic diagram of a test effect of a directivity pattern of a first-band microstrip antenna of a dual-band microstrip antenna according to an embodiment of the present invention;
FIG. 5 is a schematic diagram of a test effect of a directivity pattern of a second-band microstrip antenna of a dual-band microstrip antenna according to an embodiment of the present invention; and
FIG. 6 is a schematic diagram of an unmanned aerial vehicle according to an embodiment of the present invention.

### DETAILED DESCRIPTION

The following clearly and completely describes the technical solutions in the present invention with reference to the accompanying drawings in the embodiments. Apparently, the described embodiments are some but not all of the embodiments of the present invention. All other embodiments obtained by a person of ordinary skill in the art based on the embodiments in the present invention without creative effects shall fall within the protection scope of the present invention, which is defined only by the appended claims.

In the description of the present invention, it should be noted that unless otherwise specified and limited, the terms "mounting", "connected to each other" and "connection" should be understood in the broad sense. For example, a connection may be a fixed connection, a detachable connection, or an integral connection; may be a mechanical connection or an electrical connection; may be a direct connection or an indirect connection by means of an intermediate medium, or may alternatively be internal communication between two elements; or may be a wireless connection or a wired connection. A person of ordinary skill in the art may understand specific meanings of the foregoing terms in the present invention according to specific cases.

It should be noted that, positions or position relationships indicated by terms such as "center", "above", "below", "left", "right", "perpendicular", "horizontal", "inside" and "outside" are positions or position relationships based on the accompanying drawing, and are merely for ease of description of the present invention and for simplifying description, but not for indicating or implying that the described apparatus or element should have a particular position, or should be constructed or operated at the particular position. Therefore, the positions or position relationships should not be understood as limitations to the present invention. In addition, the terms such as "first" and "second" are merely used to describe objectives, and should not be understood as indication or implication of relative importance.

In addition, technical features involved in different implementations of the present invention that are described below can be combined with each other provided that there is no conflict.

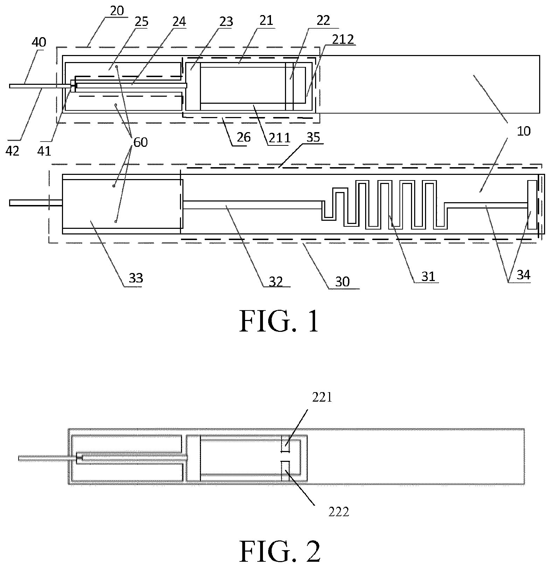

An embodiment of the present invention provides a dual-band microstrip antenna, as shown in FIG. 1, including:
a substrate 10, configured to carry the dual-band microstrip antenna and having a front surface and a back surface opposite to the front surface;
a first-band microstrip antenna 20, disposed on the front surface of the substrate 10 and configured to generate first band resonance;
a second-band microstrip antenna 30, disposed on the back surface of the substrate 10 and configured to generate second-band resonance and high-order resonance of the second-band resonance, the high-order resonance of the second-band resonance being used to be superposed on the first-band resonance; and
a coaxial feeder 40, configured to feed the first-band microstrip antenna 20 and the second-band microstrip antenna 30.

In this embodiment, the coaxial feeder 40 may include a feeding terminal 41 and a grounding terminal 42 that wraps around the feeding terminal 41 and that is coaxial with but not conducted to the feeding terminal 41. In this embodiment, structures of the first-band microstrip antenna 20 and the second-band microstrip antenna 30 include any of the following structures: an antenna with a monopole structure, an antenna with a dipole structure and an antenna with a loop structure. In this embodiment, specific structures of the first-band microstrip antenna 20 and the second-band microstrip antenna 30 are not limited. For example, the first-band microstrip antenna 20 and/or the second-band microstrip antenna 30 may be an antenna with dipole structure, an antenna with a monopole structure, an antenna with a loop structure or an antenna of any other structure.

In an embodiment of the present invention, the dual-band microstrip antenna is implemented by combining two antenna structures having different bands. The first-band microstrip antenna 20 is disposed on the front surface of the substrate 10, and the second-band microstrip antenna 30 is disposed on the back surface of the substrate 10. In an embodiment of the present invention, the dual-band microstrip antenna may be adhered to the front surface and the back surface of the substrate 10 in the form of an antenna patch. The material of the antenna patch may be metal, and is generally copper. The first-band microstrip antenna 20 generates first-band resonance. The second-band microstrip antenna 30 generates second-band resonance. High-order resonance of the second-band resonance is generated with generation of the second-band resonance. Generally, the frequency of the high-order resonance of the second-band microstrip antenna 30 is slightly higher than the frequency of the first-band resonance. For example, the frequency of the second-band resonance is 900 MHz, the frequency of the high-order resonance of the second-band resonance is generally 2.7 GHz and the frequency of the first-band resonance is 2.4 GHz. To enable the high-order resonance of the second-band resonance to be superposed on the first-band resonance, the frequency of the-second band high-order resonance needs to be adjusted, that is, the frequency of the high-order resonance of the second-band resonance is reduced to the frequency of the first-band resonance. It can be understood that, due to impact of external factors such as a signal or a current, it is difficult to ensure that the two frequencies are exactly the same, and there may be an error between the two frequencies. The high-order resonance of the second-band resonance is superposed on the first-band resonance, which expands the bandwidth of the dual-band microstrip antenna on a pitch surface. Therefore, a stable signal can be kept when the antenna tilts.

Referring to FIG. 1, in an embodiment of the present invention, the first-band microstrip antenna 20 has a monopole structure. The first-band microstrip antenna 20 may include a first grounding plate 25 and a first radio frequency module 26. The first grounding plate 25 is connected to the grounding terminal 42 of the coaxial feeder 40. The first radio frequency module 26 is connected to the feeding terminal 41 of the coaxial feeder 40. Therefore, the coaxial feeder 40 feeds the first-band microstrip antenna 20.

In an embodiment of the present invention, the first radio frequency module 26 includes: a first microstrip feeder 24 connected to the feeding terminal 41 of the coaxial feeder 40, an impedance transformation feeding strip 23 connected to the first microstrip feeder 24 and a first oscillator arm 21 connected to the impedance transformation feeding strip 23. In an embodiment of the present invention, the first oscillator arm 21 may be a monopole oscillator arm with a symmetric structure. When the first-band microstrip antenna 20 has a dipole structure, the first oscillator arm 21 may be a dipole oscillator arm with a symmetric structure. In this embodiment of the present invention, the structure of the first oscillator arm 21 may be a U-shaped structure shown in FIG. 1. The first oscillator arm 21 includes two horizontal portions 211arranged in parallel and disposed at an interval and a vertical portion 212 disposed between the two horizontal portions 211 and connected to the horizontal portion 211.

In another possible embodiment, the first oscillator arm 21 may alternatively have a semicircular structure, or any other structure that enables the first oscillator arm 21 to generate the first-band resonance in cooperation with the first microstrip feeder 24 and the impedance transformation feeding strip 23 is applicable to this embodiment.

In an optional embodiment, the first radio frequency module 26 may further include: a first microstrip 22, connected to the first oscillator arm 21, the first microstrip 22 being configured to expand the bandwidth of the first-band microstrip antenna 20. In this embodiment of the present invention, two ends of the first microstrip 22 are respectively connected to the two horizontal portions 211 of the first oscillator arm 21, and are disposed in parallel to the vertical portion 212 of the first oscillator arm 21 at an interval. The position of the first microstrip 22 may be adjusted along the horizontal portions 211 of the first oscillator arm 21 according to a requirement on bandwidth expansion. It should be noted that, the first microstrip 22 may be cut off or has a notch in the middle thereof. The position and size of the notch also affect bandwidth expansion. The first microstrip 22 may be cut off or has a notch in the middle thereof according to an actual requirement. For example, as shown in FIG. 2, in another embodiment of the present invention, the first microstrip 22 includes a first portion 221 and a second portion 222 disposed opposite to the first portion 221 at an interval. One end of the first portion 221 is connected to one of the horizontal portions 211 of the first oscillator arm 21, and one end of the second portion 222 is connected to the other horizontal portions 211 of the first oscillator arm 21. There is a gap between the other end of the first portion 221 and the other end of the second portion 222. The first portion 221 and the second portion 222 are both disposed in parallel to the vertical portion 212 of the first oscillator arm 21 at an interval. In another possible embodiment, there may be a plurality of first microstrips 22. The plurality of first microstrips 22 is disposed on the first oscillator arm 21 at intervals. Different quantities of the first microstrip 22 have different effects on bandwidth expansion. A proper quantity of the first microstrip 22 may be selected according to an actual requirement.

As shown in FIG. 1, in an embodiment of the present invention, the second-band microstrip antenna 30 may be an antenna with a monopole structure, and may include a second grounding plate 33 and a second radio frequency module 35. A conductive through hole 60 extending through the first grounding plate 25 and the second grounding plate 33 is provided on the substrate 10, and the second grounding plate 33 is connected to the first grounding plate 25 through the conductive through hole 60. In this embodiment, the feeding terminal 41 of the coaxial feeder 40 is connected to the first radio frequency module 26, so that the coaxial feeder 40 feeds the first radio frequency module 26. The first radio frequency module 26 is coupled to the second radio frequency module 35, so as to feed the second radio frequency module 35. The grounding terminal 42 of the coaxial feeder 40 is connected to the first grounding plate 25, and the first grounding plate 25 is connected to the second grounding plate 33 through the conductive through hole 60, so that the first-band microstrip antenna 20 and the second-band microstrip antenna 30 share the grounding terminal 42 of the coaxial feeder 40. Therefore, the coaxial feeder 40 can simultaneously feed the first-band microstrip antenna 20 and the second-band microstrip antenna 30. Preferably, the conductive through hole 60 may be a metallizing through hole, or may be a through hole made of another conductive medium. The conductive through hole 60 may be disposed at any position of the second grounding plate 33. There may be one or more conductive through holes 60.

In an embodiment of the present invention, the second radio frequency module 35 includes: a second microstrip feeder 32 connected to the second grounding plate 33, a second microstrip 31 connected to the second microstrip feeder 32 and a second oscillator arm 34 connected to the second microstrip 31. Preferably, the second microstrip 31 may be a curved microstrip. The second microstrip 31 is set to be curved, so as to greatly reduce the size of the second-band microstrip antenna 30, thereby reducing space occupied by the substrate 10. In this embodiment, the curved microstrip shown in FIG. 1 is used as an example for description. A curved microstrip in another form is also feasible. This is not limited herein. Preferably, the second microstrip 31 is configured to adjust the high-order resonance of the second-band resonance, so as to make the frequency of the high-order resonance of the second-band resonance be the same as that of the first-band resonance. In this embodiment, the first microstrip 31 can reduce the frequency of the high-order resonance of the second-band resonance, so as to make the frequency of the high-order resonance of the second-band resonance match the frequency of the first-band resonance.

It can be understood that, the feeding terminal 41 of the coaxial feeder 40 may be directly connected to the second microstrip feeder 32, the grounding terminal 42 of the coaxial feeder 40 may be directly connected to the second grounding plate 33, and then the conductive through hole is coupled to the radio frequency portion, so as to feed the first-band microstrip antenna 20 and the second-band microstrip antenna 30 by sharing the coaxial feeder 40.

In an embodiment, the impedance transformation feeding strip 23 and the first oscillator arm 21 are respectively coupled to the second microstrip feeder 32. Specifically, a projection of the second microstrip feeder 32 in a direction perpendicular to the substrate 10 overlaps projections of the impedance transformation feeding strip 23 and the first oscillator arm 21 in the direction perpendicular to the substrate 10, so as to make the second microstrip feeder 32 be coupled to the impedance transformation feeding strip 23 and the first oscillator arm 21. In a specific embodiment, an electric field formed by means of the foregoing coupling can change electric field distribution between the first-band microstrip antenna 20 and the second-band microstrip antenna 30, so as to cancel electromagnetic coupling between the first-band microstrip antenna 20 and the second-band microstrip antenna 30, thereby improving impedance matching and bandwidth, and adjusting two bands of the antenna. In addition, when the first radio frequency module 26 is provided with the first microstrip 22, the impedance transformation feeding strip 23, the first oscillator arm 21 and the first microstrip 22 are respectively coupled to the second microstrip feeder 32. The first microstrip 22 is coupled to the second microstrip feeder 32, so as to further adjust the two bands of the antenna.

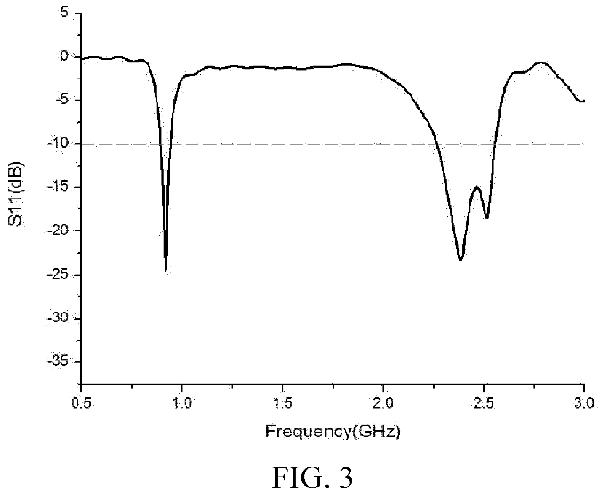

A test effect of the dual-band microstrip antenna in this embodiment is described by using the first band is 2.4 GHz and the second band is 900 MHz as an example. FIG. 3 is a diagram of a scattering parameter (S parameter) test effect of this embodiment of the present invention. Bandwidths with S11 being less than -10 dB are 890-940 MHz and 2.26-2.56 GHz, namely, a bandwidth of 50 MHz and a bandwidth of 300 MHz, which can meet the coverage of commonly used bands of 900 MHz and 2.4 GHz.

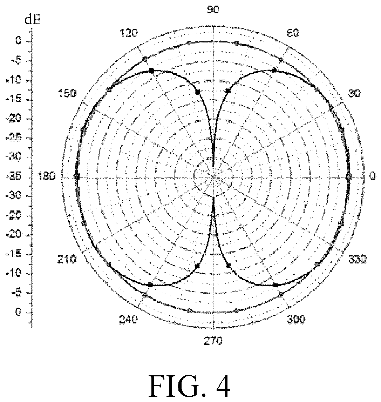

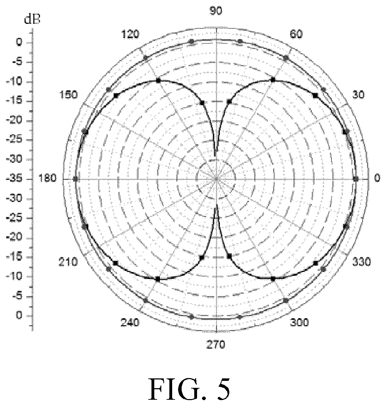

FIG. 4 and FIG. 5 are directivity patterns of the antenna in this embodiment of the present invention. FIG. 4 is a diagram of a test effect of a directivity pattern of a 2.4 GHz-band antenna. FIG. 5 is a diagram of a test effect of a directivity pattern of a 900 MHz-band antenna. It can be learned from FIG. 4 and FIG. 5 that, the antenna can implement omnidirectional coverage at both 900 MHz and 2.4 GHz. In the directivity pattern of the 2.4 GHz-band antenna, the 3-dB beamwidth of the antenna approximates 120 degrees. Compared with 80 degrees to 90 degrees of a general omnidirectional antenna, the beamwidth is apparently increased.

Preferably, the substrate 10 has a length of 86 mm, a width of 9 mm, and a thickness of 0.8 mm. The 2.4 GHz-band microstrip antenna 20 has a symmetric monopole structure. The first grounding plate 25 has a length of 21 mm. The first microstrip feeder 24 has a width of 1 mm. The impedance transformation feeding strip 23 has a width of 2.5 mm. The first oscillator arm 21 has a one-side length of 20 mm. The first oscillator arm 21 has a ring width of 1 mm. The first microstrip 22 has a size of 1 mm ^{∗} 9 mm. The 900 MHz-band microstrip antenna 30 has a monopole structure. The second microstrip feeder 32 has a size of 25 mm ^{∗} 1 mm. A curved portion of the second microstrip 31 has a size of 8.5 mm ^{∗} 2.5 mm. The second oscillator arm 34 has a T-shaped structure. The first portion of the second oscillator arm 34 that is connected to the second microstrip 31 has a size of 15 mm ^{∗} 1 mm. The second portion of the second oscillator arm 34 has a size of 9 mm ^{∗} 1.5 mm.

In an alternative example not covered by the claims, one coaxial feeder may be replaced with two coaxial feeders. That is, one coaxial feeder is used to connect the first grounding plate 25 and the first radio frequency module 26 of the first-band microstrip antenna 20, so as to feed the first-band microstrip antenna 20; and the other coaxial feeder is used to connect the second grounding plate 33 and the second microstrip feeder 32 of the second-band microstrip antenna 30, so as to feed the second-band microstrip antenna 30.

Optionally, in addition to a combination of the 900 MHz-band antenna and the 2.4 GHz-band antenna, the dual-band microstrip antenna may alternatively be a combination of a 2.4 GHz-band antenna and a 5.8 GHz-band antenna, or may be a combination of two antennas of other two bands. This is not limited in this embodiment.

According to the dual-band microstrip antenna provided in this embodiment of the present invention, the first-band microstrip antenna generates the first-band resonance, and the second-band microstrip antenna generates the second-band resonance and the high-order resonance of the second-band resonance, and the high-order resonance of the second-band resonance is used to be superposed on the first-band resonance. Therefore, the beamwidth of the dual-band microstrip antenna on a pitch surface can be expanded, so that a stable signal can be kept when the antenna tilts.

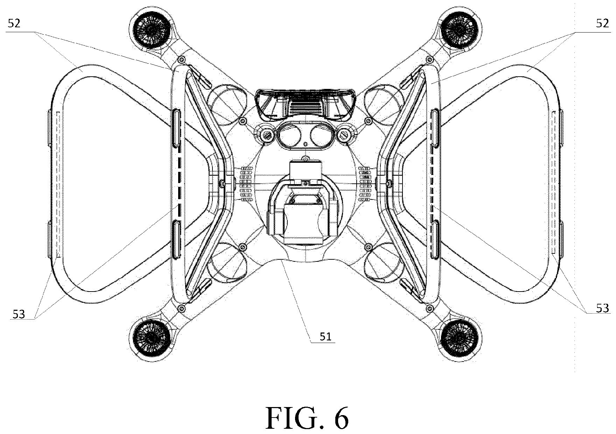

An embodiment of the present invention further provides an unmanned aerial vehicle. As shown in FIG. 6, the unmanned aerial vehicle includes a vehicle body 51, a landing gear 52 disposed below the vehicle body 51 and the dual-band microstrip antenna 53 according to any of the foregoing embodiments. In an embodiment of the present invention, the dual-band microstrip antenna 53 is disposed in the landing gear 52. In FIG. 5, a mounting position of the dual-band microstrip antenna 53 is exemplarily shown by using a top view of the unmanned aerial vehicle as an example. In this embodiment of the present invention, the mounting position of the dual-band microstrip antenna 53 is not limited to the mounting position shown in FIG. 5. Another mounting position of the dual-band microstrip antenna 53 can alternatively be used provided that the mounting position well meets a signal transceiving requirement.

The dual-band microstrip antenna is disposed in the landing gear of the unmanned aerial vehicle, thereby expanding the beamwidth of the dual-band microstrip antenna on the pitch surface. Therefore, a stable signal is kept when the antenna tilts. Therefore, during flight of the unmanned aerial vehicle, impact of a flight attitude of the unmanned aerial vehicle on communication of the unmanned aerial vehicle is reduced, thereby ensuring communication of the unmanned aerial vehicle during the flight.

It can be understood that, the dual-band microstrip antenna provided in the embodiments of the present invention can be applied not only to the unmanned aerial vehicle, but also to another scenario in which both a first band (such as 2.4 GHz) and a second band (such as 900 MHz) are used. This is not limited in the embodiments.

Although the implementations of the present invention are described with reference to the accompanying drawing, a person skilled in the art may make various modifications and variations without departing from the scope of the present invention, defined only by the appended claims. The modifications and variations shall all fall within the scope limited by the appended claims.

## Claims

1. A dual-band microstrip antenna, comprising:
a substrate (10), having a front surface and a back surface opposite to the front surface;
a first-band microstrip antenna (20), disposed on the front surface of the substrate (10) and configured to generate first-band resonance;
a second-band microstrip antenna (30), disposed on the back surface of the substrate (10) and configured to generate second-band resonance and high-order resonance of the second-band resonance, the high-order resonance of the second-band resonance being configured to be superposed on the first-band resonance; and
a coaxial feeder (40), disposed on the substrate (10) and configured to feed the first-band microstrip antenna (20) and the second-band microstrip antenna (30), wherein the first-band microstrip antenna (20) comprises a first grounding plate (25) and a first radio frequency module (26); and
the first grounding plate (25) is electrically connected to a grounding terminal (42) of the coaxial feeder (40) and the first radio frequency module (26) is electrically connected to a feeding terminal (41) of the coaxial feeder (40), wherein the first radio frequency module (26) comprises:
a first microstrip feeder (24) electrically connected to the feeding terminal (41) of the coaxial feeder (40), an impedance transformation feeding strip (23) electrically connected to the first microstrip feeder (24) and a first oscillator arm (21) electrically connected to the impedance transformation feeding strip (23);
wherein the second-band microstrip antenna (30) comprises a second grounding plate (33) and a second radio frequency module (35); and
a conductive through hole (60) extending through the first grounding plate (25) and the second grounding plate (33) is provided on the substrate (10), the second grounding plate (33) is electrically connected to the first grounding plate (25) through the conductive through hole (60);
wherein the second radio frequency module (35) comprises:
a second microstrip feeder (32) electrically connected to the second grounding plate (33), a second microstrip (31) electrically connected to the second microstrip feeder (32) and a second oscillator arm (34) electrically connected to the second microstrip (31).

2. The dual-band microstrip antenna according to claim 1, wherein the first radio frequency module (26) further comprises:
a first microstrip (22), electrically connected to the first oscillator arm (21), the first microstrip (22) being configured to expand a bandwidth of the first-band microstrip antenna (20).

3. The dual-band microstrip antenna according to claim 2, wherein the first oscillator arm (21) comprises two horizontal portions (211) arranged in parallel and disposed at an interval, and a vertical portion (212) disposed between the two horizontal portions (211) and connected to the two horizontal portions, and the first microstrip (22) is disposed in parallel to the vertical portion (212) at an interval and is connected to the two horizontal portions (211).

4. The dual-band microstrip antenna according to claim 3, wherein the first microstrip (22) comprises a first portion electrically connected to one of the horizontal portions (211) and a second portion electrically connected to the other one of the horizontal portions (211), the first portion being disposed opposite to the second portion at an interval.

5. The dual-band microstrip antenna according to any of claims 1 to 4, wherein the first oscillator arm (21) is an oscillator arm with a symmetric structure.

6. The dual-band microstrip antenna according to claim 1, wherein the second microstrip (31) is a curved microstrip.

7. The dual-band microstrip antenna according to claim 1 or 6, wherein
projections of the impedance transformation feeding strip (23) and the first oscillator arm (21) in a direction perpendicular to the substrate (10) respectively overlap a projection of the second microstrip feeder (32) in the direction perpendicular to the substrate (10), so that the impedance transformation feeding strip (23) and the first oscillator arm (21) are respectively coupled to the second microstrip feeder (32).

8. The dual-band microstrip antenna according to any of claims 1 to 7, wherein
the first-band microstrip antenna (20) is an antenna with a monopole structure, an antenna with a dipole structure or an antenna with a loop structure; and
the second-band microstrip antenna (30) is an antenna with a monopole structure, an antenna with a dipole structure or an antenna with a loop structure.

9. The dual-band microstrip antenna according to any of claims 1 to 8, wherein
the first-band microstrip antenna (20) is a 2.4 GHz-band antenna; and
the second-band microstrip antenna (30) is a 900 MHz-band antenna.

10. An unmanned aerial vehicle, comprising a vehicle body, a landing gear disposed below the vehicle body and the dual-band microstrip antenna according to any of claims 1 to 9.

11. The unmanned aerial vehicle according to claim 10, wherein the dual-band microstrip antenna is disposed in the landing gear.

## Patentansprüche

1. Doppelband-Mikrostreifenantenne, umfassend:
ein Substrat (10), das eine vordere Oberfläche und eine der vorderen Oberfläche gegenüberliegende hintere Oberfläche aufweist;
eine Erstband-Mikrostreifenantenne (20), die auf der vorderen Oberfläche des Substrats (10) angeordnet und dazu konfiguriert ist, Erstband-Resonanz zu erzeugen;
eine Zweitband-Mikrostreifenantenne (30), die auf der hinteren Oberfläche des Substrats (10) angeordnet und dazu konfiguriert ist, Zweitband-Resonanz und Resonanz höherer Ordnung der Zweitband-Resonanz zu erzeugen, wobei die Resonanz höherer Ordnung der Zweitband-Resonanz dazu konfiguriert ist, die Erstband-Resonanz zu überlagern; und
eine Koaxialspeiseleitung (40), die auf dem Substrat (10) angeordnet und dazu konfiguriert ist, die Erstband-Mikrostreifenantenne (20) und die Zweitband-Mikrostreifenantenne (30) zu versorgen, wobei die Erstband-Mikrostreifenantenne (20) eine erste Masseplatte (25) und ein erstes Funkfrequenzmodul (26) umfasst; und
die erste Masseplatte (25) mit einem Masseanschluss (42) der Koaxialspeiseleitung (40) elektrisch verbunden ist und das erste Funkfrequenzmodul (26) mit einem Speiseanschluss (41) der Koaxialspeiseleitung (40) elektrisch verbunden ist, wobei das erste Funkfrequenzmodul (26) umfasst:
eine erste Mikrostreifenspeiseleitung (24), die mit dem Speiseanschluss (41) der Koaxialspeiseleitung (40) elektrisch verbunden ist, einen Impedanztransformations-Speisestreifen (23), der mit der ersten Mikrostreifenspeiseleitung (24) elektrisch verbunden ist, und einen ersten Oszillatorarm (21), der mit dem Impedanztransformations-Speisestreifen (23) elektrisch verbunden ist;
wobei die Zweitband-Mikrostreifenantenne (30) eine zweite Masseplatte (33) und ein zweites Funkfrequenzmodul (35) umfasst; und
eine leitfähige Durchgangsöffnung (60), die sich durch die erste Masseplatte (25) und die zweite Masseplatte (33) erstreckt, auf dem Substrat (10) bereitgestellt ist, wobei die zweite Masseplatte (33) über die leitfähige Durchgangsöffnung (60) mit der ersten Masseplatte (25) elektrisch verbunden ist;
wobei das zweite Funkfrequenzmodul (35) umfasst:
eine zweite Mikrostreifenspeiseleitung (32), die mit der zweiten Masseplatte (33) elektrisch verbunden ist, einen zweiten Mikrostreifen (31), der mit der zweiten Mikrostreifenspeiseleitung (32) elektrisch verbunden ist, und einen zweiten Oszillatorarm (34), der mit dem zweiten Mikrostreifen (31) elektrisch verbunden ist.

2. Doppelband-Mikrostreifenantenne nach Anspruch 1, wobei das erste Funkfrequenzmodul (26) ferner umfasst:
einen ersten Mikrostreifen (22), der mit dem ersten Oszillatorarm (21) elektrisch verbunden ist, wobei der erste Mikrostreifen (22) dazu konfiguriert ist, eine Bandbreite der Erstband-Mikrostreifenantenne (20) zu erweitern.

3. Doppelband-Mikrostreifenantenne nach Anspruch 2, wobei der erste Oszillatorarm (21) zwei horizontale Abschnitte (211), die parallel und in einem Abstand angeordnet sind, und einen vertikalen Abschnitt (212) umfasst, der zwischen den zwei horizontalen Abschnitten (211) angeordnet und mit den zwei horizontalen Abschnitten verbunden ist, und der erste Mikrostreifen (22) parallel zu dem vertikalen Abschnitt (212) in einem Abstand angeordnet und mit den zwei horizontalen Abschnitten (211) verbunden ist.

4. Doppelband-Mikrostreifenantenne nach Anspruch 3, wobei der erste Mikrostreifen (22) einen ersten Abschnitt, der mit einem der horizontalen Abschnitte (211) elektrisch verbunden ist, und einen zweiten Abschnitt umfasst, der mit dem anderen der horizontalen Abschnitte (211) elektrisch verbunden ist, wobei der erste Abschnitt in einem Abstand zu dem zweiten Abschnitt und diesem gegenüberliegend angeordnet ist.

5. Doppelband-Mikrostreifenantenne nach einem der Ansprüche 1 bis 4, wobei der erste Oszillatorarm (21) ein Oszillatorarm mit einer symmetrischen Struktur ist.

6. Doppelband-Mikrostreifenantenne nach Anspruch 1, wobei der zweite Mikrostreifen (31) ein gekrümmter Mikrostreifen ist.

7. Doppelband-Mikrostreifenantenne nach Anspruch 1 oder 6, wobei
Projektionen des Impedanztransformations-Speisestreifens (23) und des ersten Oszillatorarms (21) in einer senkrecht zu dem Substrat (10) liegenden Richtung jeweils eine Projektion der zweiten Mikrostreifenspeiseleitung (32) in der senkrecht zu dem Substrat (10) liegenden Richtung überlappen, so dass der Impedanztransformations-Speisestreifen (23) und der erste Oszillatorarm (21) jeweils mit der zweiten Mikrostreifenspeiseleitung (32) gekoppelt sind.

8. Doppelband-Mikrostreifenantenne nach einem der Ansprüche 1 bis 7, wobei
die Erstband-Mikrostreifenantenne (20) eine Antenne mit einer Monopolstruktur, eine Antenne mit einer Dipolstruktur oder eine Antenne mit einer Schleifenstruktur ist; und
die Zweitband-Mikrostreifenantenne (30) eine Antenne mit einer Monopolstruktur, eine Antenne mit einer Dipolstruktur oder eine Antenne mit einer Schleifenstruktur ist.

9. Doppelband-Mikrostreifenantenne nach einem der Ansprüche 1 bis 8, wobei
die Erstband-Mikrostreifenantenne (20) eine 2,4-GHz-Band-Antenne ist; und
die Zweitband-Mikrostreifenantenne (30) eine 900-MHz-Band-Antenne ist.

10. Unbemanntes Luftfahrzeug, umfassend einen Fahrzeugkörper, ein unter dem Fahrzeugkörper angeordnetes Fahrwerk und die Doppelband-Mikrostreifenantenne nach einem der Ansprüche 1 bis 9.

11. Unbemanntes Luftfahrzeug nach Anspruch 10, wobei die Doppelband-Mikrostreifenantenne in dem Fahrwerk angeordnet ist.

## Revendications

1. Antenne microruban à deux bandes, comprenant :
un substrat (10) présentant une face avant et une face arrière opposée à la face avant ;
une antenne microruban à première bande (20), disposée sur la face avant du substrat (10) et prévue pour générer une résonance de première bande ;
une antenne microruban à deuxième bande (30), disposée sur la face arrière du substrat (10) et prévue pour générer une résonance de deuxième bande et une résonance d'ordre élevé de la résonance de deuxième bande, la résonance d'ordre élevé de la résonance de deuxième bande étant prévue pour être superposée à la résonance de première bande ; et
un feeder coaxial (40), disposé sur le substrat (10) et prévu pour alimenter l'antenne microruban à première bande (20) et l'antenne microruban à deuxième bande (30), l'antenne microruban à première bande (20) comprenant une première plaque de mise à la masse (25) et un premier module radiofréquence (26) ; et
la première plaque de mise à la masse (25) étant reliée électriquement à une borne de masse (42) du feeder coaxial (40), et le premier module radiofréquence (26) étant relié électriquement à une borne d'alimentation (41) du feeder coaxial (40), le premier module radiofréquence (26) comprenant :
un premier feeder microruban (24) relié électriquement à la borne d'alimentation (41) du feeder coaxial (40), un ruban d'alimentation à transformation d'impédance (23) relié électriquement au premier feeder microruban (24), et un premier bras oscillant (21) relié électriquement au ruban d'alimentation à transformation d'impédance (23) ;
l'antenne microruban à deuxième bande (30) comprenant une deuxième plaque de mise à la masse (33) et un deuxième module radiofréquence (35) ; et
un trou traversant conducteur (60) s'étendant au travers de la première plaque de mise à la masse (25) et de la deuxième plaque de mise à la masse (33) étant prévu sur le substrat (10), la deuxième plaque de mise à la masse (33) étant reliée électriquement à la première plaque de mise à la masse (25) par le trou traversant conducteur (60) ;
le deuxième module radiofréquence (35) comprenant :
un deuxième feeder microruban (32) relié électriquement à la deuxième plaque de mise à la masse (33), un deuxième microruban (31) relié électriquement au deuxième feeder microruban (32) et un deuxième bras oscillant (34) relié électriquement au deuxième microruban (31).

2. Antenne microruban à deux bandes selon la revendication 1, où le premier module radiofréquence (26) comprend en outre :
un premier microruban (22) relié électriquement au premier bras oscillant (21), ledit premier microruban (22) étant prévu pour étendre la largeur de bande de l'antenne microruban à première bande (20).

3. Antenne microruban à deux bandes selon la revendication 2, où le premier bras oscillant (21) comprend deux parties horizontales (211) disposées parallèlement et espacées l'une de l'autre, et une partie verticale (212) disposée entre les deux parties horizontales (211) et reliée aux deux parties horizontales, et où le premier microruban (22) est disposé parallèlement à la partie verticale (212) et espacé de celle-ci, et est relié aux deux parties horizontales (211).

4. Antenne microruban à deux bandes selon la revendication 3, où le premier microruban (22) comprend une première partie reliée électriquement à une des parties horizontales (211), et une deuxième partie reliée électriquement à l'autre partie horizontale (211), la première partie étant disposée à l'opposé de la deuxième partie et espacée de celle-ci.

5. Antenne microruban à deux bandes selon l'une des revendications 1 à 4, où le premier bras oscillant (21) est un bras oscillant à structure symétrique.

6. Antenne microruban à deux bandes selon la revendication 1, où le deuxième microruban (31) est un microruban incurvé.

7. Antenne microruban à deux bandes selon la revendication 1 ou la revendication 6, où
des saillies du ruban d'alimentation à transformation d'impédance (23) et du premier bras oscillant (21) dans une direction perpendiculaire au substrat (10) chevauchent respectivement une saillie du deuxième feeder microruban (32) dans la direction perpendiculaire au substrat (10), de sorte que le ruban d'alimentation à transformation d'impédance (23) et le premier bras oscillant (21) sont reliés respectivement au deuxième feeder microruban (32).

8. Antenne microruban à deux bandes selon l'une des revendications 1 à 7, où
l'antenne microruban à première bande (20) est une antenne à structure monopolaire, une antenne à structure dipolaire ou une antenne à structure en boucle ; et
l'antenne microruban à deuxième bande (30) est une antenne à structure monopolaire, une antenne à structure dipolaire ou une antenne à structure en boucle.

9. Antenne microruban à deux bandes selon l'une des revendications 1 à 8, où
l'antenne microruban à première bande (20) est une antenne à bande 2,4 GHz ; et
l'antenne microruban à deuxième bande (30) est une antenne à bande 900 MHz.

10. Véhicule aérien sans pilote, comprenant une caisse de véhicule, un train d'atterrissage disposé sous la caisse de véhicule, et l'antenne microruban à deux bandes selon l'une des revendications 1 à 9.

11. Véhicule aérien sans pilote selon la revendication 10, où l'antenne microruban à deux bandes est disposée dans le train d'atterrissage.
